# EUROPÄISCHE PATENTSCHRIFT

(11) **EP 0 641 417 B1**
(45) Veröffentlichungstag und Bekanntmachung des Hinweises auf die Patenterteilung: **13.11.1996**
(21) Anmeldenummer: 94906196.4
(22) Anmeldetag: 02.02.1994
(51) Int. Cl.: F16B 13/08, F16B 13/06

(54) **DURCH SCHLAG SETZBARER ANKER**
KNOCK-IN ANCHOR
ANCRE POSABLE PAR BATTAGE

(30) Priorität: 17.03.1993 DE 9303899 U; 01.10.1993 DE 4333471
(43) Veröffentlichungstag der Anmeldung: 08.03.1995
(73) Patentinhaber: Liebig, Heinrich, D-64319 Pfungstadt (DE)
(72) Erfinder: Liebig, Heinrich, D-64319 Pfungstadt (DE)
(74) Vertreter: Zenz, Joachim Klaus, Dipl.-Ing.
(86) Internationale Anmeldenummer: EP9400288
(87) Internationale Veröffentlichungsnummer: WO9421928

(56) Entgegenhaltungen:
- EP-A- 0 308 620
- DE-A- 3 524 284
- DE-C- 944 090
- DE-U- 9 303 899
- GB-A- 2 131 906

## Beschreibung

Die Erfindung betrifft einen durch Schlag setzbaren Anker mit einem Ankerbolzen, dessen langgestreckter zylindrischer Schaft an seinem in Setzrichtung vorderen Ende einen sich kegelstumpfförmig erweiternden Spreizkopf aufweist und auf dem eine von ihrem in Setzrichtung vorderen Ende her über einen Teil ihrer Länge mehrfach geschlitzte und im geschlitzten Bereich eine Anzahl von Verankerungsarme bildende Ankerhülse verschieblich aufgesetzt ist, deren Innendurchmesser im wesentlichen dem Außendurchmesser des zylindrischen Schafts entspricht, und in deren Außenseite in einigem Abstand vom in Setzrichtung vorderen Ende eine umlaufende Nut eingebracht ist, welche die in Setzrichtung vorderen Endbereiche der Verankerungsarme relativ zu den anschließenden Bereichen unter Verformung des im Nutgrund verbleibenden Materials derart ausschwenkbar ausbildet, daß sie bei in die zugehörige Bohrung eingesetzten Zustand durch Ausübung von Schlägen auf die setzrichtungsabgewandte Stirnfläche der Ankerhülse auf den sich am Grund der Bohrung abstützenden Spreizkopf aufgetrieben und derart aufgeschwenkt werden, daß ihr in Setzrichtung vorderes Ende unter Erzeugung eines Hinterschnitts in das Material der Bohrungswandung eindringt.

Es ist ein Schlaganker dieser Art bekannt (EP-PS 0 308 619), bei welchem der Ankerbolzen einen sich im Querschnitt konkav gewölbt erweiternden Spreizkopf aufweist, und die an dem in Setzrichtung vor der Nut liegenden Bereiche der Verankerungsarme mit mehreren in Richtung der Längsmittelachse des Ankers voneinander beabstandeten Schneidzähnen oder Schneidkanten versehen ist, welche sich beim Aufspreizen dieser vorderen Bereiche durch Schläge auf das aus der zugeordneten Bohrung herausweisende Ende der Ankerhülse ins Material der Bohrungswandung eingraben sollen.

Die Herstellung dieses Ankers ist wegen der speziellen Form des Spreizkopfs und der mit in Längsrichtung versetzten Schneidzähnen versehenen Bereiche der Verankerungsarme aufwendig und dementsprechend teuer.

Der Erfindung liegt demgegenüber die Aufgabe zugrunde, einen durch Schlag setzbaren Anker zu schaffen, welcher wesentlich einfacher und somit kostengünstiger herstellbar ist, und dabei ohne erhöhten Aufwand setzbar ist und die geforderte Belastbarkeit aufweist.

Ausgehend von einem Anker der eingangs erwähnten Art wird diese Aufgabe erfindungsgemäß dadurch gelöst, daß die in Setzrichtung vorderen Endbereiche der Verankerungsarme zusammengenommen die Form von zwei mit ihren im Durchmesser kleineren Stirnflächen aneinanderliegenden Kegelstümpfen haben, deren am in Setzrichtung vorderen Ende einerseits und an der Nut andererseits gebildete Basisfläche im nicht aufgespreizten Zustand jeweils einen dem Außendurchmesser der Ankerhülse im wesentlichen entsprechenden Durchmesser haben. Anker, deren Verankerungsarme in ihrem vorderen Endbereich zusammengenommen die äußere Form von zwei aneinanderliegenden Kegelstümpfen haben, sind zwar grundsätzlich bekannt (DE-GM 17 72 225; DE-OS 35 11 784), jedoch unterscheiden sich diese Anker durch das für die Aufspreizung vorgesehene Funktionsprinzip. Die Ankerhülse wird nämlich nicht auf einen kegelstumpfförmigen Spreizkopf aufgetrieben, sondern die bis in die vorgesehene Setztiefe in die zugehörige Bohrung eingeschobene Ankerhülse wird durch Einschlagen eines Keils ausschließlich radial gespreizt. So kommt es auch nicht zu der erfindungsgemäß auftretenden Materialabtragung in der Bohrung durch den axialen Vortrieb der Ankerhülse. Eine Übertragung der bei den bekannten Ankern vorgesehenen Form der Verankerungsarme im vorderen Endbereich auf durch Schlag auf die Verankerungshülse unter Materialabtragung setzbare Schlaganker liegt aufgrund der unterschiedlichen Setzfunktion keinesfalls nahe. Andererseits sind durch Schlag auf die auf einem kegelstumpfförmigen Spreizkörper aufspreizbare Ankerhülse setzbare Schlaganker bekannt (AT-PS 378 245), bei denen die Verankerungsarme in ihrem vorderen Endbereich jedoch nicht in Form von zwei aneinanderliegenden Kegelstümpfen ausgebildet sind, wodurch sich dann auch eine andersartige Ausbildung der Schneide und des vorderen Endbereichs ergibt. Auch eine das Verschwenken der vorderen Endbereiche der Verankerungsarme beim Setzvorgang unter Verformung des im Nutgrund verbleibenden Materials ermöglichende schmale Ringnut ist bei diesem bekannten Schlaganker nicht vorgesehen.

Dabei ist die Ausgestaltung bei einem ersten Ausführungsbeispiel der Erfindung so getroffen, daß die im Anschluß an die in Setzrichtung vordere Stirnfläche ausgebildete Kegelstumpffläche einen kleineren Kegelwinkel als die sich anschließende Kegelstumpffläche aufweist.

Bei einem abgewandelten, gegenwärtig bevorzugten zweiten Ausführungsbeispiel ist die Ausgestaltung dagegen so getroffen, daß die im Anschluß an die in Setzrichtung vordere Stirnfläche ausgebildete Kegelstumpffläche einen größeren Kegelwinkel als die sich anschließende Kegelstumpffläche aufweist.

Der Kegelwinkel der in Setzrichtung vorderen Kegelstumpffläche ist dabei zweckmäßig größer als 90° gewählt, so daß der zwischen ihrer in Setzrichtung vorderen Stirnfläche und der Kegelstumpffläche in einem Längsmittelschnitt eingeschlossene Winkel eine scharfkantige umlaufende Kante bildet, welche beim Setzvorgang meißelartig in die Wandung der Bohrung eindringt. Dadurch wird die erforderliche Schlagkraft zum Setzen des Ankers deutlich erniedrigt, weil die scharfkantige umlaufende Kante mit vergleichsweise geringerer Schlagkraft in die Wandung des Bohrlochs eindringt.

Der zwischen der in Setzrichtung vordere Stirnfläche und der Kegelstumpffläche eingeschlossene Winkel kann dabei im Bereich zwischen 15° und 75° vorzugsweise im Bereich zwischen 30° und 60° liegen.

Besonders zweckmäßig ist die Ausgestaltung dann, wenn der Kegelwinkel des Spreizkopfs so gewählt ist, daß die durch Schlitzung der Ankerhülse gebildeten Verankerungsarme im Bereich der in Setzrichtung vorderen Kegelstumpffläche in bestimmungsgemäß aufgespreizten Zustand im Bereich ihrer Kegel-Mantellinien in einer zumindest angenähert radialen Lage in Bezug auf die Längsmittelachse des Bohrlochs stehen. Es entstehen dann nämlich nur geringe, radial nach außen in die Bohrungswandung gerichtete Kraftkomponenten, wodurch der Anker also auch in solchen Bohrlöchern verwendet werden kann, die in der Nähe einer Begrenzungskante bzw. des Rands des Untergrunds eingebracht sind. Die beim Anspannen des Werkstücks an den Untergrund auftretenden Reaktionskräfte sind vielmehr im wesentlichen parallel zur Längsmittelachse des Ankers gerichtet, so daß der Anker insofern mit den in neuerer Zeit entwickelten spreizdruckfrei an einer Hinterschnittfläche in einer Vorbohrung setzbaren Hinterschnitt-Dübeln vergleichbar ist, wobei jedoch das Erfordernis des Einbringens eines Hinterschnitts in eine Vorbohrung entfällt und der Anker selbst vergleichsweise einfacher aufgebaut ist.

Die in Setzrichtung gemessene Breite der Mündung der Nut kann in vorteilhafter Weiterbildung der Erfindung so gewählt sein, daß sie bei bestimmungsgemäßer Aufweitung der vorderen Verankerungsarm-Bereiche weitgehend geschlossen ist. Wenn dann - beispielsweise durch entsprechende Zugbelastung des Ankerbolzens - versucht wird, die vorderen Verankerungsarm-Bereiche weiter aufzuspreizen, schließt sich die Nut, und die vorderen Verankerungsarm-Bereiche werden an den rückwärtigen Verankerungsarm-Bereichen abgestützt, so daß zusätzliche Belastungen dann versuchen, die Verankerungsarme insgesamt elastisch aufzuweiten.

Die umlaufende Nut kann entweder einen rechteckigen oder einen im wesentlichen dreieckigen Querschnitt mit im Nutgrund liegender Dreieckspitze aufweisen. Im zweiten Fall liegen dann die Begrenzungsflächen der Nut in bestimmungsgemäß aufgespreiztem Zustand der vorderen Verankerungsarm-Bereiche flächig aneinander.

Der Kegelwinkel der in Spreizrichtung vorderen Kegelstumpffläche kann mit Vorteil so gewählt werden, daß er etwa dem Kegelwinkel des Spreizkopfs des Ankerbolzens entspricht.

Um den Anker beim Setzen möglichst starr in der zugehörigen Bohrung abzustützen, kann es zweckmäßig sein, die in Setzrichtung weisende freie Fläche des Spreizkopfs in Form eines Kegels auszubilden, dessen Kegelwinkel im wesentlichen gleich dem Winkel der Schneiden am Vorderende des zur Herstellung der Bohrung verwendeten Steinbohrers ist.

Die Erfindung ist in der folgenden Beschreibung zweier Ausführungsbeispiele in Verbindung mit der Zeichnung näher erläutert, und zwar zeigt:
- Fig. 1: eine Seitenansicht eines ersten Ausführungsbeispieles eines erfindungsgemäßen Schlag-Ankers;
- Fig. 2: den in Fig. 1 gezeigten Anker mit entlang einer Längsmittelebene geschnittenen Ankerhülse in einer Bohrung in einem Untergrund eingesetzt, wobei die Ankerhülse in noch unaufgeweitetem Ausgangszustand gezeigt und das Werkzeug zum Aufweiten der Ankerhülse zusätzlich strichpunktiert angedeutet ist;
- Fig. 3: die in Fig. 2 gezeigte Ansicht nach dem Aufweiten der vorderen Verankerungsarm-Bereiche der Ankerhülse;
- Fig. 4: eine den Fig. 2 und 3 entsprechende Ansicht, bei welcher ein Werkstück durch eine auf dem Ankerbolzen aufgeschraubte Mutter mit Unterlegscheibe an dem mit der Bohrung versehenen Untergrund gehalten ist;
- Fig. 5: eine Seitenansicht eines zweiten Ausführungsbeispiels eines erfindungsgemäßen Schlag-Ankers;
- Fig. 6: den in Fig. 5 gezeigten Anker mit entlang einer Längsmittelebene geschnittener Ankerhülse in einer Bohrung in einem Untergrund eingesetzt, wobei die Ankerhülse in noch unaufgeweitetem Ausgangszustand gezeigt und das Werkzeug zum Aufweiten der Ankerhülse zusätzlich strichpunktiert angedeutet ist;
- Fig.7: die in Fig. 6 gezeigte Ansicht nach dem Aufweiten der vorderen Verankerungsarm-Bereiche der Ankerhülse; und
- Fig. 8: eine den Fig. 6 und 7 entsprechende Ansicht, bei welcher ein Werkstück durch eine auf dem Ankerbolzen aufgeschraubte Mutter mit Unterlegscheibe an dem mit der Bohrung versehenen Untergrund gehalten ist.

Das in den Zeichnungsfiguren 1 bis 4 gezeigte, in seiner Gesamtheit mit 10 bezeichnete Ausführungsbeispiel eines erfindungsgemäßen Schlag-Ankers setzt sich im wesentlichen aus zwei Hauptteilen, nämlich einem langgestreckten Ankerbolzen 12 einerseits und einer längsverschieblich auf dem zylindrischen Schaft 14 des Ankerbolzens angeordneten Ankerhülse 16 andererseits zusammen.

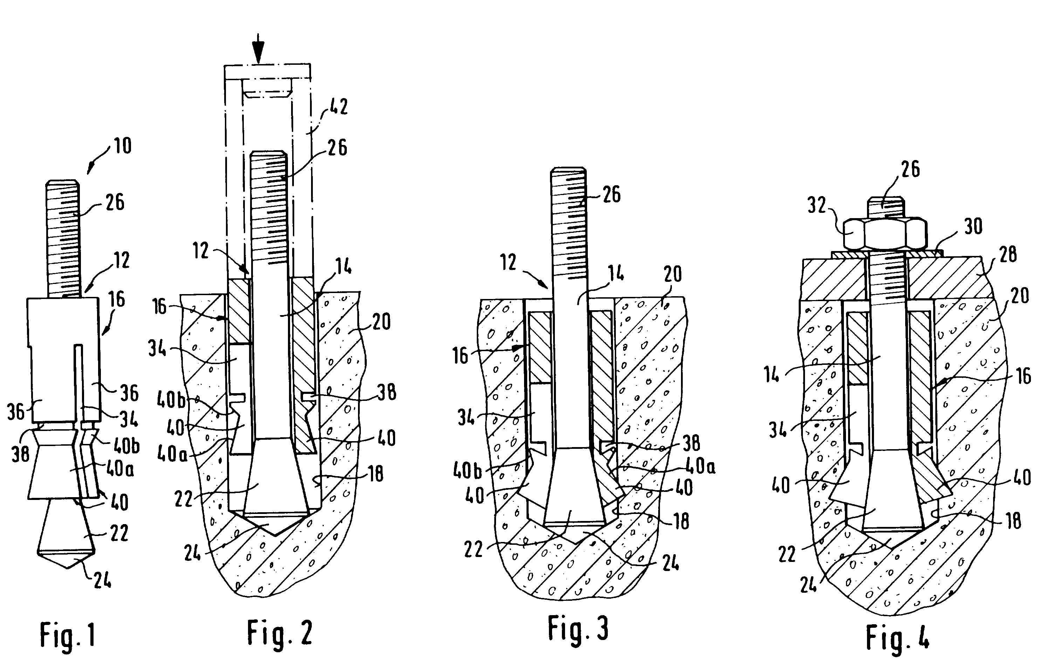

Der Ankerbolzen 12 weist an seinem, in Setzrichtung vorderen, d.h. beim Setzen in ein Bohrloch 18 in einem Untergrund 20 (Fig. 2 bis 4) am inneren Ende des Bohrlochs zur Anlage kommenden Ende seines Schafts 14 einen angestauchten kegelstumpfförmigen Spreizkopf 22 auf, der sich also vom Schaft 14 des Ankerbolzens 12 aus konisch erweitert. Um eine großflächige Abstützung des Ankerbolzens 12 beim Setzen des Spreizdübels am inneren Bohrungsende zu erhalten, kann es zweckmäßig sein, dieses Ende 24, d.h. die Basisfläche des kegelstumpfförmigen Spreizkopfs 22 in der in den Zeichnungsfiguren veranschaulichten Weise derart kegelig auszubilden, daß es sich dem durch die Schneiden des verwendeten Steinbohrers gebildeten inneren Bohrlochende komplementär anpaßt.

In seinem, dem Spreizkopf 22 gegenüberliegenden Schaftbereich ist der Schaft 14 des Ankerbolzens zumindest über einen Teil seines Endbereichs mit Gewinde 26 versehen, so daß die - in Figur 4 veranschaulichte - Befestigung eines Werkstücks 28 auf dem Untergrund 20 mittels einer auf das Gewinde 26 des Schafts 14 des zuvor im Bohrloch 18 gesetzten Ankers aufgeschraubten und über eine Unterlegscheibe 30 auf dem Werkstück 28 abgestützten Mutter 32 möglich ist.

Am in Setzrichtung vorderen Ende der Ankerhülse 16 sind durch - im dargestellten Fall drei - von der bohrungsinneren Stirnfläche aus in gleichmäßigen Winkelabständen versetzt über einen Teil der Hülsenlänge eingearbeitete Längsschlitze 34 insgesamt drei Verankerungsarme 36 ausgebildet, in deren Außenseite in einigem Abstand von dem in Setzrichtung vorderen Ende eine umlaufende Nut 38 eingestochen ist, welche die in Setzrichtung vorderen Endbereiche 40 der Verankerungsarme 36 relativ zu den entgegen der Setzrichtung anschließenden Bereiche unter Verformung des im Nutgrund verbleibenden Materials ausschwenkbar ausbildet. Dadurch ist es möglich, die bis zur Anlage der vorderen Innenkanten der Endbereiche 40 auf die Umfangsfläche des Spreizkopfs 22 geschobene Ankerhülse 16 durch Schläge mittels Maschine oder von Hand auf die in Figur 2 schematisch strichpunktiert dargestellte Schlaghülse 42 weiter ins Innere des Bohrlochs 18 einzutreiben, wobei die Endbereiche 40 entsprechend der Konizität des Spreizkopfs 22 sich zusätzlich aufspreizen und ins Material der Wandung des Bohrlochs 18 einschneiden und in diesem Bereich dann sozusagen einen Hinterschnitt im Bohrloch bilden. In Figur 3 ist der durch Ausübung von Schlägen bewirkte gesetzte Zustand der Ankerhülse im Bohrloch gezeigt. Da die Endbereiche 40 auf ein äußeres Durchmessermaß aufgespreizt sind, welches größer als der Bohrloch-Durchmesser ist, kann die Ankerhülse und somit der Anker insgesamt nur noch unter Zerstörung des Bohrlochs 18 aus diesem herausgezogen werden. In Auszugsrichtung wirkende Kräfte, beispielsweise die von der Mutter 32 beim Anziehen des Werkstücks 28 auf den Schaft 14 des Ankerbolzens 12 ausgeübten Kräfte versuchen, den Spreizkopf 22 in die Ankerhülse zurückzuziehen, wodurch die Endbereiche 40 zusätzlich im Sinne einer Aufspreizung verschwenkt werden und die formschlüssige Verriegelung der Endbereiche 40 in der Wandung des Bohrlochs sozusagen in Abhängigkeit von der über den Ankerbolzen eingeleiteten Last verstärkt wird.

Die durch die umlaufende Nut 38 am Vorderende der Verankerungsarme 36 ausgebildeten Endbereiche 40 haben die am besten in Figur 1 erkennbare doppel-kegelstumpfförmige Form, bei welcher zwei mit ihren im Durchmesser kleineren Stirnflächen aneinanderliegenden Kegelstumpfflächen 40a, 40b eine Einschnürung bewirken, wobei die am in Setzrichtung vorderen Ende gelegene Basisfläche der Kegelstumpffläche 40a und die an der Nut 38 ausgebildete Basisfläche der Kegelstumpffläche 40b im nicht aufgespreizten Zustand jeweils eine dem Außendurchmesser der Ankerhülse 16 im wesentlichen entsprechenden Durchmesser haben. Dabei ist die Ausgestaltung der Kegelflächen 40a, 40b so getroffen, daß die in Setzrichtung vordere Kegelstumpffläche 40a einen kleineren Kegelwinkel als die sich anschließende Kegelfläche 40b hat.

Die Breite der beim gezeigten Ausführungsbeispiel im Querschnitt rechteckigen umlaufenden Nut 38 ist so gewählt, daß die in Setzrichtung gemessene Breite ihrer Mündung in der bestimmungsgemäßen Setzlage weitgehend oder fast geschlossen ist, wie dies in Figur 3 und 4 erkennbar ist. Bei weiterem Aufspreizen der Endbereiche 40 aufgrund zusätzlicher, über den Ankerbolzen 14 einwirkender Beanspruchungen schließt sich dann die umlaufende Nut 38 vollständig, und die Endbereiche 40 werden dann durch Anlage an der gegenüberliegenden seitlichen Begrenzungsfläche der Nut 38 an den Verankerungsarmen 34 abgestützt. Weiter erhöhte Belastungen versuchen dann also, die Verankerungsarme insgesamt elastisch aufzuweiten.

Die umlaufende Nut 38 kann alternativ zum beschriebenen Ausführungsbeispiel auch mit einem im wesentlichen dreiekkigen Querschnitt ausgebildet werden, wobei die Dreieckspitze den Nutgrund bildet und der Winkel der Dreieckspitze so gewählt ist, daß die Nut im gesetzten Zustand gerade geschlossen ist, d.h. die seitlichen Dreieckseiten aufeinander zur Anlage kommen.

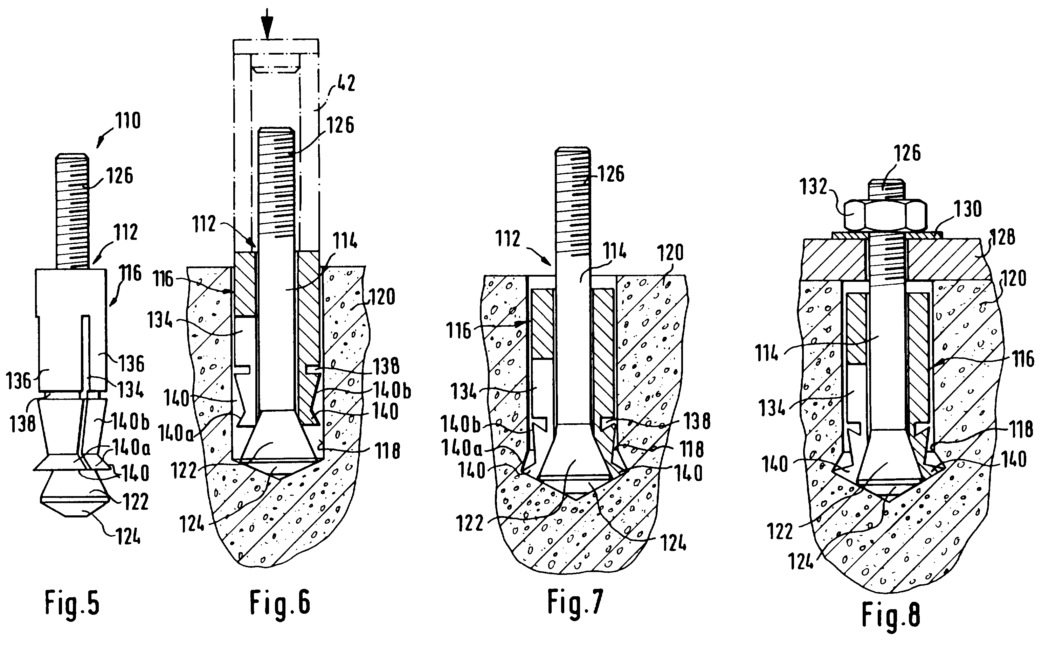

Das in den Figuren 5 bis 8 gezeigte, in seiner Gesamtheit mit 110 bezeichnete zweite Ausführungsbeispiel eines in der erfindungsgemäßen Weise ausgebildete Schlag-Ankers entspricht dem vorstehend beschriebenen Schlag-Anker 10 weitgehend, so daß es genügt, nachstehend nur die gegenüber dem Anker 10 getroffenen Abwandlungen im einzelnen zu beschreiben, während für die übereinstimmenden Ausgestaltungen beider Anker 10 und 110 auf die vorausgehende Beschreibung verwiesen werden kann, zumal in den Zeichnungsfiguren gleichen Teilen beider Ausführungsbeispiele gleiche Bezugszeichen zugeordnet sind, denen im Fall des Ankers 110 lediglich jeweils eine "1" vorangestellt ist

Im Unterschied zum Anker 10 ist beim Anker 110 der Kegelwinkel der in Setzzrichtung vorderen Kegelstumpffläche 140a größer als der Kegelwinkel der anschließenden Kegelstumpffläche 140b gewählt, wodurch die in Setzzrichtung vordere Kegelstumpffläche 140a zwangsläufig niedriger als die anschließende Kegelstumpffläche 140b wird. Das hat zur Folge, daß die am Übergang zwischen der in Setzrichtung vorderen Stirnfläche und den Mantellinien der anschließenden Kegelstumpffläche 140a gemessenen Winkel kleiner werden. Die beim Setzvorgang in die Wandung des Bohrlochs 118 eindringende Kante der Ankerhülse ist also meißelartig zugeschärft, wodurch zum Setzen des Ankers 110 vergleichsweise geringere Schlagkräfte erforderlich sind.

Besonders vorteilhaft ist die geringere Höhe der Kegelstumpffläche 140a in Verbindung mit einem Spreizkopf 122 des Ankerbolzens 112 mit ebenfalls im Vergleich zum Spreizkopf 22 größerem Kegelwinkel, da es dadurch möglich wird, daß die Kegelstumpffläche 140a in gesetztem Zustand - in der in den Figuren 7 und 8 dargestellten Weise - im wesentlichen oder doch nahezu radial zur Bohrloch-Mittelachse verläuft. D.h. die durch das Anziehen der Mutter 132 erzeugte Haltekraft für das Werkstück 128 wird mittels im wesentlichen parallel zur Bohrloch-Mittelachse verlaufender Reaktionskräfte in den Untergrund übertragen, d.h. radial nach außen gerichtete Komponenten von Belastungen, welche z.B. im Randbereich des Untergrunds zu einem Aufbrechen des Bohrlochs führen könnten, sind gering.

## Patentansprüche

1. Durch Schlag setzbarer Anker (10; 110) mit einem Ankerbolzen (12; 112) , dessen langgestreckter zylindrischer Schaft (14; 114) an seinem in Setzrichtung vorderen Ende einen sich kegelstumpfförmig erweiternden Spreizkopf (22; 122) aufweist und auf dem eine von ihrem in Setzrichtung vorderen Ende her über einen Teil ihrer Länge mehrfach geschlitzte und im geschlitzten Bereich eine Anzahl von Verankerungsarmen (36; 136) bildende Ankerhülse (16; 116) verschieblich aufgesetzt ist, deren Innendurchmesser im wesentlichen dem Außendurchmesser des zylindrischen Schafts (14; 114) entspricht, und in deren Außenseite in einigem Abstand vom in Setzrichtung vorderen Ende eine umlaufende Nut (38; 138) eingebracht ist, welche die in Setzrichtung vorderen Endbereiche der Verankerungsarme (36; 136) relativ zu den anschließenden Bereichen unter Verformung des im Nutgrund verbleibenden Materials derart ausschwenkbar ausbildet, daß sie bei in die zugehörige Bohrung (18; 118) eingesetzten Zustand durch Ausübung von Schlägen auf die setzrichtungsabgewandte Stirnfläche der Ankerhülse (16; 116) auf den am Grund der Bohrung sich abstützenden Spreizkopf (22; 122) aufgetrieben und derart aufgeschwenkt werden, daß ihr in Setzrichtung vorderes Ende unter Erzeugung eines Hinterschnitts in das Material der Bohrungswandung eindringt,
**dadurch gekennzeichnet**,
daß die in Setzrichtung vorderen Endbereiche (40; 140) der Verankerungsarme (36; 136) zusammengenommen die äußere Form von zwei mit ihren im Durchmesser kleineren Stirnflächen aneinanderliegenden Kegelstümpfen (40a, 40b; 140a, 140b) haben, deren am in Setzrichtung vorderen Ende einerseits und an der Nut (38; 138) andererseits gebildete Basisfläche im nicht aufgespreizten Zustand jeweils einen dem Außendurchmesser der Ankerhülse (16; 116) im wesentlichen entsprechenden Durchmesser haben.

2. Anker nach Anspruch 1, dadurch gekennzeichnet, daß die im Anschluß an die in Setzrichtung vordere Stirnfläche ausgebildete Kegelstumpffläche (40a) einen kleineren Kegelwinkel als die sich anschließende Kegelstumpffläche (40b) aufweist.

3. Anker nach Anspruch 1, dadurch gekennzeichnet, daß die im Anschluß an die in Setzrichtung vordere Stirnfläche ausgebildete Kegelstumpffläche (140a) einen größeren Kegelwinkel als die sich anschließende Kegelstumpffläche (140b) aufweist.

4. Anker nach Anspruch 3, dadurch gekennzeichnet, daß der Kegelwinkel der in Setzrichtung vorderen Kegelstumpffläche (140a) größer als 90° gewählt ist, so daß der zwischen ihrer in Setzrichtung vorderen Stirnfläche und der Kegelstumpffläche in einem Längsmittelschnitt eingeschlossene Winkel eine scharfkantige umlaufende Kante bildet, welche beim Setzvorgang meißelartig in die Wandung der Bohrung eindringt.

5. Anker nach Anspruch 4, dadurch gekennzeichnet, daß der zwischen der in Setzrichtung vorderen Stirnfläche und der Kegelstumpffläche (140a) eingeschlossene Winkel im Bereich zwischen 15° bis 75°, vorzugsweise im Bereich zwischen 30° und 60° liegt.

6. Anker nach einem der Ansprüche 3 bis 5, dadurch gekennzeichnet, daß der Kegelwinkel des Spreizkopfs (122) so gewählt ist, daß die durch Schlitzung der Ankerhülse (116) gebildeten Verankerungsarme (136) im Bereich der in Setzrichtung vorderen Kegelstumpffläche in bestimmungsgemäß aufgeweitetem Zustand im Bereich ihrer Kegel-Mantellinien in einer zumindest angenähert radialen Lage in Bezug auf die Längsmittelachse des Bohrlochs (118) stehen.

7. Anker nach Anspruch oder 6, dadurch gekennzeichnet, daß die in Setzrichtung gemessene Breite der Mündung der Nut (38; 138) so gewählt ist, daß sie bei bestimmungsgemäßer Aufweitung der vorderen VerankerungsarmBereiche (40; 140) weitgehend geschlossen ist.

8. Anker nach Anspruch 7, dadurch gekennzeichnet, daß die umlaufende Nut (38; 138) einen rechteckigen Querschnitt aufweist.

9. Anker nach Anspruch 7, dadurch gekennzeichnet, daß die umlaufende Nut (38; 138) einen im wesentlichen dreieckigen Querschnitt mit im Nutgrund liegender Dreieckspitze aufweist.

10. Anker nach einem der Ansprüche 2 bis 9, dadurch gekennzeichnet, daß der Kegelwinkel der in Setzrichtung vorderen Kegelstumpffläche (40a; 140a) etwa dem Kegelwinkel des Spreizkopfs (22; 122) des Ankerbolzens entspricht.

11. Anker nach einem der Ansprüche 1 bis 10, dadurch gekennzeichnet, daß die in Setzrichtung weisende freie Fläche (24; 124) des Spreizkopfs (22; 122) die Form eines Kegels hat, dessen Kegelwinkel im wesentlichen gleich dem Winkel der Schneiden am vorderen Ende des zur Herstellung der Bohrung verwendeten Steinbohrers ist.

## Claims

1. An impact-installable wall anchor (10; 110) with an anchoring pin (12; 112), the elongated cylindrical shaft of which (14; 114) has a head (22; 122), which expands in the form of a truncated cone, at its front end in the direction of installation and on which an anchoring sleeve (16; 116), which is repeatedly slotted over a portion of its length from its front end in the direction of installation and forms a number of anchoring arms (36; 136) in the slotted region, is slipped on so that it can slide, the internal diameter of the anchoring sleeve (16; 116) corresponding essentially to the external diameter of the cylindrical shaft (14; 114) and a peripheral groove (38; 138), which is mounted in the outside of the anchoring sleeve (16; 116) at some distance from the end that is the front end in the direction of installation and which forms the end regions of the anchoring arms, (36; 136) that are the front end regions in the direction of installation so that these end regions can swing out relative to the adjoining regions with deformation of the material remaining in the base of the groove in such a manner that, when inserted in the associated borehole (18; 118), they are driven by impacts on the end face of the anchoring sleeve (16; 116), which is directed away from the direction of installation, onto the expanding head (12, 122) supported on the base of the borehole and swung out in such a manner that their end, which is the front end in the installation direction, penetrates the material of the borehole wall with production of an undercut, characterized in that the front end regions (40; 140) of the anchoring arms (36; 136) in the direction of installation together have the external shape of two truncated cones (40a; 140a, 140b), the end surfaces of which of smaller diameter are adjacent and the base surface of which, formed on the one hand at the end, which is the front end in the installation direction, and, on the other at the groove (38; 138), each have, in the unexpanded state, a diameter, which essentially corresponds to the external diameter of the anchoring sleeve.

2. The wall anchor of claim 1, characterized in that the truncated cone surface (40a), constructed adjacent to the front end surface in the direction of installation, has a smaller conical angle than the adjacent truncated cone surface (40b).

3. The wall anchor of claim 1, characterized in that the truncated cone surface (140a), constructed adjacent to the front end surface in the direction of installation, has a larger conical angle than the adjacent truncated cone surface (140b).

4. The wall anchor of claim 3, characterized in that the conical angle of the front, truncated cone surface (140a) in the direction of the installation is selected to be larger than 90°, so that the angle enclosed in a central longitudinal section between its front end surface in the direction of installation and the truncated cone surface defines a sharp-edged peripheral edge, which penetrates the wall of the borehole in chisel fashion during the installation process.

5. The wall anchor of claim 4, characterized in that the angle enclosed between the front end surface in the direction of installation and the truncated cone surface (140a) ranges from 15° to 75°, preferably from 30° and 60°.

6. The wall anchor of one of the claims 3 to 5, characterized in that the conical angle of the expanding head (122) is selected so that the anchoring arms (136), formed by slotting the anchoring sleeve (116) in the region of the front truncated surface in the direction of installation, are, in the specified expanded state in the region of their conical surface lines, in at least approximately radial position with respect to the longitudinal center axis of the borehole (118).

7. The wall anchor of claims 1 or 6, characterized in that the width of the opening of the groove (38; 138), measured in the direction of installation, is selected so that the opening is essentially closed when the front anchoring arm regions (40; 140) are expanded to the specified extent.

8. The wall anchor of claim 7, characterized in that the peripheral groove (38; 138) has a rectangular cross section.

9. The wall anchor of claim 7, characterized in that the peripheral groove (38; 138) has an essentially triangular cross section with the apex of the triangle lying at the base of the groove.

10. The wall anchor of one of the claims 2 to 9, characterized in that the conical angle of the front truncated cone surface (40a; 140a) in the direction of installation corresponds approximately to the conical angle of the expanding head (22; 122) of the anchoring pin.

11. The wall anchor of one of the claims 1 to 10, characterized in that the free surface (24; 124) of the expanding head (22; 122) pointing in the direction of installation has the shape of a cone, the conical angle of which essentially is equal to the angle of the cutting edges at the front end of the rock drill used to produce the borehole.

## Revendications

1. Cheville d'ancrage (10 ; 110) se posant par frappe, comprenant un boulon (12 ; 112) dont la tige cylindrique allongée (14 ; 114) présente à son extrémité avant dans la direction de pose une tête d'expansion (22 ; 122) s'élargissant en forme de tronc de cône et sur lequel est placée mobile une douille (16 ; 116) fendue à plusieurs endroits sur une partie de sa longueur à partir de son extrémité avant dans la direction de pose et formant dans la zone fendue un certain nombre de bras d'ancrage (36 ; 136), dont le diamètre intérieur correspond sensiblement au diamètre extérieur de la tige cylindrique (14 ; 114) et dans la face extérieure de laquelle est faite, à une certaine distance de l'extrémité avant dans la direction de pose, une rainure circonféren tielle (38 ; 138) qui rend les zones d'extrémité avant dans la direction de pose des bras d'ancrage (36 ; 136) écartables par rotation relativement aux zones contiguës avec déformation de la matière qui reste au fond de la rainure, de façon telle que, à l'état engagé dans le trou associé (18 ; 118), des frappes sur la face frontale opposée à la direction de pose de la douille (16 ; 116) fassent monter ces zones d'extrémité sur la tête d'expansion (22 ; 122) appuyée sur le fond du trou et les fassent tourner de façon telle que leur extrémité avant dans la direction de pose pénètre dans la matière de la paroi du trou en produisant une contre-dépouille,
caractérisée par le fait que les zones d'extrémité avant dans la direction de pose (40 ; 140) des bras d'ancrage (36 ; 136) ont, réunies, la forme extérieure de deux troncs de cône (40a, 40b ; 140a, 140b) joints par leurs faces frontales de plus petit diamètre, dont les bases formées, d'un côté, à l'extrémité avant dans la direction de pose et, de l'autre côté, à la rainure (38 ; 138) ont à l'état non expansé un diamètre correspondant sensiblement au diamètre extérieur de la douille (16 ; 116).

2. Cheville d'ancrage selon la revendication 1, caractérisée par le fait que la surface tronconique (40a) qui part de la face frontale avant dans la direction de pose a un plus petit angle au sommet que la surface tronconique jointe à elle (40b).

3. Cheville d'ancrage selon la revendication 1, caractérisée par le fait que la surface tronconique (140a) qui part de la face frontale avant dans la direction de pose a un plus grand angle au sommet que la surface tronconique jointe à elle (140b).

4. Cheville d'ancrage selon la revendication 3, caractérisée par le fait que l'angle au sommet de la surface tronconique avant dans la direction de pose (140a) est supérieur à 90°, de sorte que l'angle compris sur une coupe axiale entre la face frontale avant dans la direction de pose de cette surface tronconique et cette dernière elle-même forme un bord circonférentiel à arête vive qui, lors de la pose, pénètre à la manière d'un burin dans la paroi du trou.

5. Cheville d'ancrage selon la revendication 4, caractérisée par le fait que l'angle compris entre la face frontale avant dans la direction de pose et la surface tronconique (140a) est compris entre 15° et 75°, de préférence entre 30° et 60°.

6. Cheville d'ancrage selon l'une des revendications 3 à 5, caractérisée par le fait que l'angle au sommet de la tête d'expansion (122) est tel que les bras d'ancrage (136) formés par fendage de la douille (116) soient, dans la zone de la surface tronconique avant dans la direction de pose, à l'état écarté prévu, dans la zone de leurs génératrices, dans une position au moins approximativement radiale par rapport à l'axe longitudinal du trou (118).

7. Cheville d'ancrage selon l'une des revendications 1 à 6, caractérisée par le fait que la largeur dans la direction de pose de l'orifice de la rainure (38, 138) est telle que, lorsque les zones avant (40 ; 140) des bras d'ancrage ont atteint l'écartement prévu, celle-ci soit en grande partie fermée.

8. Cheville d'ancrage selon la revendication 7, caractérisée par le fait que la rainure circonférentielle (38, 138) est de section rectangulaire.

9. Cheville d'ancrage selon la revendication 7, caractérisée par le fait que la rainure circonférentielle (38, 138) est de section sensiblement triangulaire avec un sommet du triangle situé au fond de la rainure.

10. Cheville d'ancrage selon l'une des revendications 2 à 9, caractérisée par le fait que l'angle au sommet de la surface tronconique avant dans la direction de pose (40a ; 140a) correspond à peu près à l'angle au sommet de la tête d'expansion (22 ; 122) du boulon.

11. Cheville d'ancrage selon l'une des revendications 1 à 10, caractérisée par le fait que la surface libre dirigée dans la direction de pose (24 ; 124) de la tête d'expansion (22 ; 122) a la forme d'un cône dont l'angle au sommet est sensiblement égal à l'angle des tranchants situés à l'extrémité avant du trépan utilisé pour la réalisation du trou.
